(19)

Europäisches Patentamt
European Patent Office
Office européen des brevets

(11) **EP 1 879 058 A2**

(12) **EUROPEAN PATENT APPLICATION**

(43) Date of publication:
**16.01.2008 Bulletin 2008/03**

(51) Int Cl.:
***G02B 5/28*** (2006.01)

(21) Application number: **07108619.3**

(22) Date of filing: **22.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **11.07.2006 JP 2006190977**

(71) Applicant: **Murakami Corporation**
**Shizuoka-shi, Shizuoka, 422-8569 (JP)**

(72) Inventor: **Terada, Yoshiyuki**
**Fujieda-city Shizuoka 426-8601 (JP)**

(74) Representative: **von Kreisler Selting Werner**
**Patentanwälte**
**Deichmannhaus am Dom**
**Bahnhofsvorplatz 1**
**50667 Köln (DE)**

(54) **Dielectric Multilayer Filter**

(57)     To provide a dielectric multilayer filter, such as a red-reflective dichroic filter, that has a reduced incident-angle dependency.

A dielectric multilayer film 30 is formed on a front surface of a transparent substrate 28 to form a dielectric multilayer filter 26. The dielectric multilayer film 30 is composed of films 34 of a intermediate-refractive-index material and films 36 of a high-refractive-index material alternately stacked one on another. The intermediate-refractive-index material forming the films 34 has a refractive index higher than 1.52 and equal to or lower than 2.1. The high-refractive-index material forming the films 36 has a refractive index equal to or higher than 2.0 and higher than the refractive index of the intermediate-refractive-index material forming the films 34. The value of "the optical thickness of the film 36 of the high-refractive-index material divided by the optical thickness of the film 34 of the intermediate-refractive-index material" is set to be greater than 1 and equal to or smaller than 4.

## FIG.1

(Front surface side)

34
36

34
36
34

30

28a
28

(Back surface side)

EP 1 879 058 A2

## EP 1 879 058 A2

**Description**

The present invention relates to a dielectric multilayer filter that has a reduced incident-angle dependency.

A dielectric multilayer filter is an optical filter that is composed of a stack of a plurality of kinds of thin films made of dielectric materials having different refractive indices and serves to reflect (remove) or transmit a component of a particular wavelength band in incident light taking advantage of light interference. For example, the dielectric multilayer filter is a so-called IR cut filter (infrared cut filter) used in a CCD camera for removing infrared light (light of wavelengths longer than about 650 nm), which adversely affects color representation, and transmitting visible light. Alternatively, the dielectric multilayer filter is a so-called dichroic filter used in a liquid crystal projector for reflecting light of a particular color in incident visible light and transmitting light of other colors.

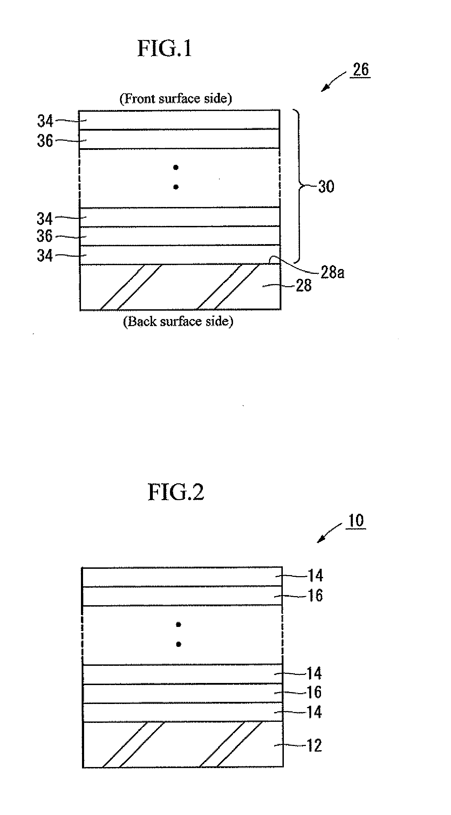

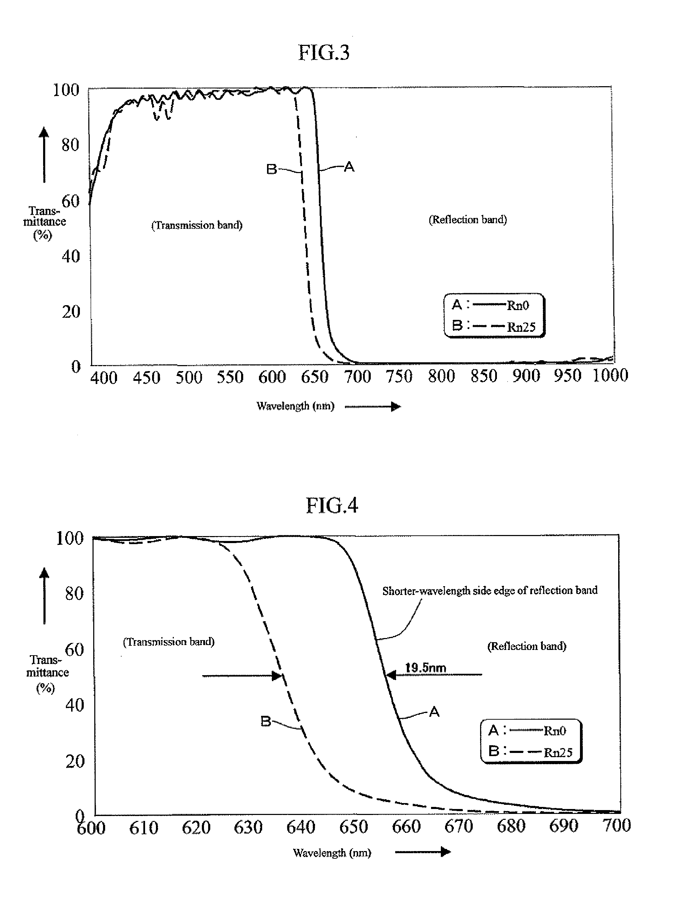

FIG. 2 shows a structure of an IR cut filter using a conventional dielectric multilayer film. An IR cut filter 10 is composed of a substrate 12 made of an optical glass, and low-refractive-index films 14 of $SiO_2$ (films made of a material of a low refractive index) and high-refractive-index films 16 of $TiO_2$ (films of a material of a high refractive index) alternately stacked on the front surface of the substrate 12. FIG. 3 shows spectral transmittance characteristics of the IR cut filter 10. In FIG. 3, characteristics A and B represent the following transmittances, respectively.

Characteristic A: transmittance for an incident angle of 0 degrees

Characteristic B: transmittance of an average of p-polarized light and s-polarized light (n-polarized light) for an incident angle of 25 degrees

As can be seen from FIG. 3, infrared light (light having wavelengths longer than about 650 nm) is reflected and removed, and visible light is transmitted.

FIG. 4 is an enlarged view showing the characteristics within a band of 600 to 700 nm in FIG. 3. As can be seen from FIG. 4, the half-value wavelength ("half-value wavelength" refers to wavelength at which the transmittance is 50%) at the shorter-wavelength-side edge of the reflection band ("reflection band" refers to a band of high reflectance between the shorter-wavelength-side edge and the longer-wavelength-side edge) is shifted by as much as 19.5 nm between the case where the incident angle is 0 degrees (characteristic A) and the case where the incident angle is 25 degrees (characteristic B). In this way, in the conventional IR cut filter 10 shown in FIG. 2, the shorter-wavelength-side edge of the reflection band shifts largely (or depends largely on the incident angle). Therefore, if the IR cut filter is used for a CCD camera, there is a problem that the color tone of the taken image changes depending on the incident angle.

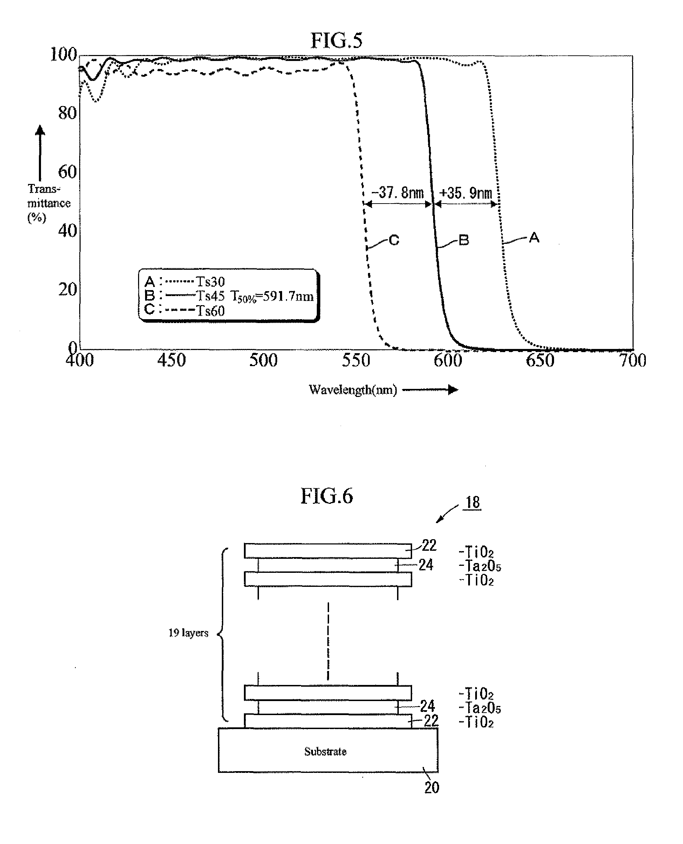

A dichroic filter using a conventional dielectric multilayer film has a structure similar to that shown in FIG. 2. That is, the dichroic filter is composed of a substrate 12 made of an optical glass and low-refractive-index films 14 of $SiO_2$ and high-refractive-index films 16 of $TiO_2$ alternately stacked on the front surface of the substrate 12. FIG. 5 shows spectral transmittance characteristics of the dichroic filter configured as a red-reflective dichroic filter. The characteristics are those in the case where an antireflection film is formed on the back surface of the substrate. In FIG. 5, characteristics A, B and C represent the following transmittances, respectively. Here, a normal incident angle of the dichroic filter is 45 degrees.

Characteristic A: transmittance of s-polarized light for an incident angle of 30 degrees

Characteristic B: transmittance of s-polarized light for an incident angle of 45 degrees

Characteristic C: transmittance of s-polarized light for an incident angle of 60 degrees

As can be seen from FIG. 5, the half-value wavelength at the shorter-wavelength-side edge of the reflection band is shifted by 35.9 nm toward longer wavelengths when the incident angle is 30 degrees (characteristic A) and by 37.8 nm toward shorter wavelengths when the incident angle is 60 degrees (characteristic C), compared with the case of the normal incident angle 45 degrees (characteristic B). A typical reflection band of the red-reflective dichroic filter has the shorter-wavelength-side edge at about 600 nm and a longer-wavelength-side edge at about 680 nm or longer. In particular, there is a problem that the color tone of the reflection light changes if the shorter-wavelength-side edge is shifted largely (by 37.8 nm) toward shorter wavelengths as in the case of the characteristic C.

A conventional technique for reducing the wavelength shift is described in the patent literature 1 described below. FIG. 6 shows a filter structure according to the technique. A dielectric multilayer filter 18 is composed of an optical glass substrate 20, and thin films 22 of $TiO_2$ and thin films 24 of $Ta_2O_5$ or the like having a refractive index about 0.3 lower than that of $TiO_2$ alternately stacked on the front surface of the optical glass substrate 20.

[Patent literature 1] Japanese Patent Laid-Open No. 7-27907 (FIG. 1)

An object of the present invention is to provide a dielectric multilayer filter that has a reduced incident-angle dependency.

A dielectric multilayer filter according to the present invention comprises: a transparent substrate; and a dielectric multilayer film having a predetermined reflection band formed on one surface of the transparent substrate. In the dielectric multilayer filter, the dielectric multilayer film has a structure including films of a intermediate-refractive-index material having a refractive index higher than 1.52 and equal to or lower than 2.1 for light having a wavelength of 550 nm and films of a high-refractive-index material having a refractive index equal to or higher than 2.0 and higher than that of the films made of the intermediate-refractive-index material for light having a wavelength of 550 nm that are alternately stacked one on another, and the value of "the optical thickness of the film of the high-refractive-index material divided by the optical thickness of the film of the intermediate-refractive-index material" is greater than 1 and equal to or smaller than 4, preferably, greater than 2 and equal to or smaller than 4.

According to the present invention, since films of a intermediate-refractive-index material having a refractive index higher than 1. 52 and equal to or lower than 2.1 for light having a wavelength of 550 nm and films of a high-refractive-index material having a refractive index equal to or higher than 2.0 and higher than that of the films made of the intermediate-refractive-index material for light having a wavelength of 550 nm are alternately stacked one on another, and the value of "the optical thickness of the film of the high-refractive-index material divided by the optical thickness of the film of the intermediate-refractive-index material" is greater than 1 and equal to or smaller than 4, preferably, greater than 2 and equal to or smaller than 4, there can be provided a dielectric multilayer filter that has an average refractive index increased compared with a case where the value equals to 1 and a reduced incident-angle dependency. Furthermore, according to the present invention, the width of the reflection band can be advantageously reduced. Therefore, a filter having a reflection band for a single color, such as a green-reflective dichroic filter, can be readily provided. In this application, the term "average refractive index" means the value of "the optical thickness of the entire dielectric multilayer film multiplied by the reference wavelength divided by the physical thickness of the entire dielectric multilayer film".

In the present invention, the following relationship holds for the average refractive index of the entire dielectric multilayer film, where reference character nM denotes the refractive index of the intermediate-refractive-index material, and reference character nH denotes the refractive index of the high-refractive-index material.

$$(nM + nH)/2 < \text{average refractive index} < nH$$

According to the present invention, the average refractive index can be equal to or higher than 1.7, for example. For example, the intermediate-refractive-index material may be any of ZaF3 (refractive index ≒ 1.58), $Al_2O_3$ (refractive index ≒ 1.62), a complex oxide (refractive index ≒ 1.65 to 1.8) of $Pr_2O_3$ and $Al_2O_3$ or a complex oxide of $La_2O_3$ and $Al_2O_3$, $Bi_2O_3$ (refractive index ≒ 1.9), SiO (refractive index ≒ 1.97) and $Ta_2O_5$ (refractive index ≒ 2.0), or a complex oxide of two or more of these materials. Furthermore, for example, the high-refractive-index material may be any of $Ta_2O_5$ (refractive index ≒ 2.0), $TiO_2$ (refractive index ≒ 2.1 to 2.5) and $Nb_2O_5$ (refractive index ≒ 2.1 to 2.4), or a complex oxide of any of $Ta_2O_5$, $TiO_2$ and $Nb_2O_5$ mixed with $La_2O_3$ (refractive index ≒ 1.9).

FIG. 1 is a schematic diagram showing a stack structure of a dielectric multilayer filter according to an embodiment of the present invention;

FIG. 2 is a schematic diagram showing a stack structure of an IR cut filter using a conventional dielectric multilayer filter;

FIG. 3 shows spectral transmittance characteristics of the IR cut filter shown in FIG. 2;

FIG. 4 is an enlarged view showing the spectral transmittance characteristics within a band of 600 to 700 nm in FIG. 3;

FIG. 5 shows spectral transmittance characteristics (simulation values) of a conventional red-reflective dichroic filter having the structure shown in FIG. 2;

FIG. 6 is a diagram showing a stack structure of a dielectric multilayer filter described in the patent literature 1;

FIG. 7 shows spectral transmittance characteristics of a red-reflective dichroic filter according to the design of an example (1) for different incident angles; and

FIG. 8 shows spectral transmittance characteristics of a red-reflective dichroic filter according to the design of an example (2) for different incident angles.

An embodiment of the present invention will be described below. FIG. 1 shows a dielectric multilayer filter according to the embodiment of the present invention. A dielectric multilayer filter 26 comprises a transparent substrate 28 of white glass or the like, and a dielectric multilayer film 30 deposited on a front surface (incidence plane of light) 28a of the transparent substrate 28. The dielectric multilayer film 30 is composed of films 34 of a intermediate-refractive-index material having a predetermined refractive index and films 36 of a high-refractive-index material having a refractive index higher than that of the intermediate-refractive-index material alternately stacked one on another. The dielectric multilayer film 30 is basically composed of an odd number of layers but may be composed of an even number of layers. Although the film 34 having the lower refractive index is disposed as the first layer in FIG. 1, the film 36 having the higher refractive index may be disposed as the first layer. For example, the dielectric multilayer film 26 may serve as a red-reflective dichroic filter that reflects red light, a green-reflective dichroic filter that reflects green light or an infrared cut filter that reflects infrared light.

The film 34 made of the intermediate-refractive-index material has a refractive index higher than 1.52 (= the refractive index of the glass substrate) and equal to or lower than 2.1 for light having a wavelength of 550 nm. The film 36 made of the high-refractive-index material has a refractive index equal to or higher than 2.0 for light having a wavelength of 550 nm. The value of "the optical thickness of the film 36 of the high-refractive-index material divided by the optical thickness of the film 34 of the intermediate-refractive-index material" is greater than 1 and equal to or smaller than 4, preferably, greater than 2 and equal to or smaller than 4.

The film 34 having the lower refractive index in the dielectric multilayer film 30 may be made of a dielectric material (intermediate-refractive-index material), which is any of $Bi_2O_3$, $Ta_2O_5$, $La_2O_3$, $Al_2O_3$, SiOx ($x \leqq 1$), $LaF_3$, a complex oxide of La2O3 and $Al_2O_3$ and a complex oxide of $Pr_2O_3$ and $Al_2O_3$, or a complex oxide of two or more of these materials, for example. The film 36 having the higher refractive index in the dielectric multilayer film 30 may be made of a dielectric material (high-refractive-index material), which is any of $TiO_2$, $Nb_2O_5$ and $Ta_2O_5$ or a complex oxide mainly containing any of $TiO_2$, $Nb_2O_5$ and $Ta_2O_5$, for example.

Since the dielectric multilayer filter 26 shown in FIG. 1 has the multilayer film composed of the films 34 of the intermediate-refractive-index material and the films 36 of the high-refractive-index material, the average refractive index thereof is higher than that of a multilayer film composed of films of a material of a low refractive index and films of a material of a high refractive index, and therefore, the incident-angle dependency thereof is reduced. Furthermore, since the value of "the optical thickness of the film of the high-refractive-index material divided by the optical thickness of the film of the intermediate-refractive-index material" is greater than 1, the average refractive index of the dielectric multilayer film is higher than that in the case where the value equal to 1, and therefore, the incident-angle dependency is reduced.

Examples

Examples of the dielectric multilayer filter 26 shown in FIG. 1 configured as a red-reflective dichroic filter will be described. The values of the refractive index and the attenuation coefficient in each example are those with respect to a design wavelength (reference wavelength) λo in that example.

<Example (1)>

The dielectric multilayer film 30 was designed using the following parameters.
Substrate: glass (having a refractive index of 1.52 and an attenuation coefficient of 0)
Film 34 of intermediate-refractive-index material: complex oxide of $La_2O_3$ and $Al_2O_3$ (having a refractive index of 1.72 and an attenuation coefficient of 0)
Film 36 of high-refractive-index material: $Ta_2O_5$ (having a refractive index of 2.19 and an attenuation coefficient of 0)
Optical thickness ratio between film 34 and film 36: approximately 1:2
Number of layers: 27
Reference wavelength (center wavelength of reflection band) λo: 465 nm
Average refractive index of entire dielectric multilayer film 30: 2.00
The thickness of each layer in the dielectric multilayer film 30 is shown in Table 1.

[Table 1]

| Layer No. | Material | Optical thickness (nd) | Layer No. | Material | Optical thickness (nd) |
|---|---|---|---|---|---|
| (Substrate) | | | 15 | $La_2O_3+Al_2O_3$ | 0.25 λo |
| 1 | $La_2O_3+Al_2O_3$ | 0.162 λo | 16 | $Ta_2O_5$ | 0.5 λo |
| 2 | $Ta_2O_5$ | 0.515 λo | 17 | $La_2O_3+Al_2O_3$ | 0.25 λo |
| 3 | $La_2O_3+Al_2O_3$ | 0.254 λo | 1 8 | $Ta_2O_5$ | 0.5 λo |
| 4 | $Ta_2O_5$ | 0. 539 λo | 19 | $La_2O_3+Al_2O_3$ | 0.25 λo |
| 5 | $La_2O_3+Al_2O_3$ | 0.27 λo | 20 | $Ta_2O_5$ | 0.5 λo |
| 6 | $Ta_2O_5$ | 0.539 λo | 21 | $La_2O_3+Al_2O_3$ | 0.25 λo |
| 7 | $La_2O_3+Al_2O_3$ | 0.27 λo | 22 | $Ta_2O_5$ | 0.5 λo |
| 8 | $T a_2O_5$ | 0.5 λo | 23 | $La_2O_3+Al_2O_3$ | 0.25 λo |
| 9 | $La_2O_3+Al_2O_3$ | 0.25 λo | 24 | $Ta_2O_5$ | 0.516 λo |

(continued)

| Layer No. | Material | Optical thickness (nd) | Layer No. | Material | Optical thickness (nd) |
|---|---|---|---|---|---|
| 10 | $Ta_2O_5$ | 0.5 λo | 25 | $La_2O_3$+$Al_2O_3$ | 0.229 λo |
| 11 | $La_2O_3$+$Al_2O_3$ | 0.25 λo | 26 | $Ta_2O_5$ | 0.33λ o |
| 12 | $Ta_2O_5$ | 0.5 λo | 27 | $La_2O_3$+$Al_2O_3$ | 0.249 λo |
| 13 | $La_2O_3$+$Al_2O_3$ | 0.25 λo | (Air layer) | | |
| 14 | $Ta_2O_5$ | 0.5 λo | | | λo=465nm |

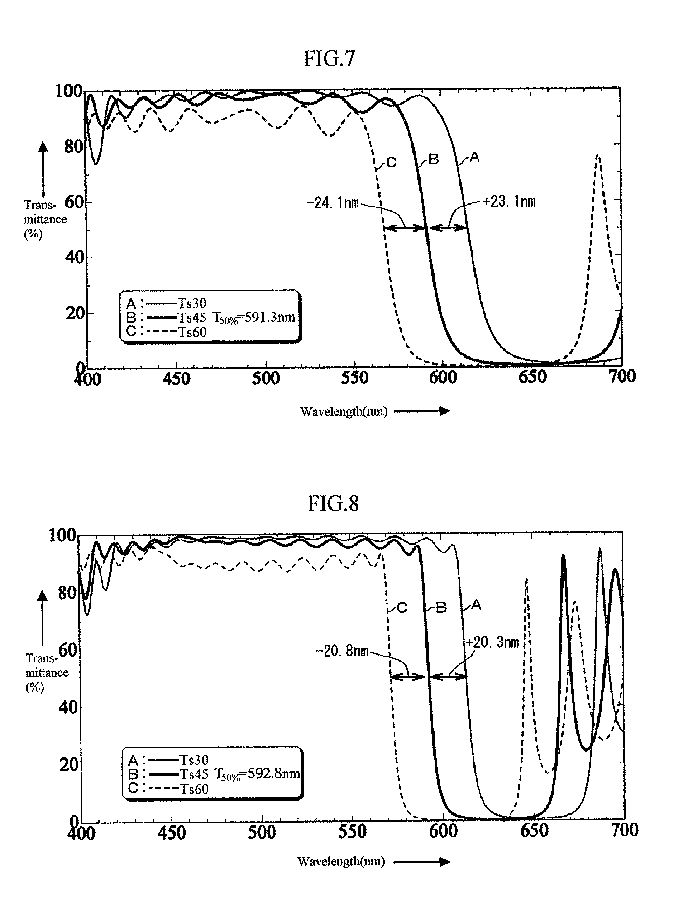

FIG. 7 shows spectral transmittance characteristics of the red-reflective dichroic filter 26 according to the design of the example (1) (characteristics of the entire red-reflective dichroic filter 26) for different incident angles (simulation values). In FIG. 7, characteristics A, B and C represent the following transmittances, respectively.

Characteristics A: transmittance of s-polarized light for an incident angle of 30 degrees (= normal incident angle minus 15 degrees)

Characteristic B: transmittance of s-polarized light for an incident angle of 45 degrees (= normal incident angle)

Characteristic C: transmittance of s-polarized light for an incident angle of 60 degrees (= normal incident angle plus 15 degrees)

As can be seen from FIG. 7, the shifts of the half-value wavelength at the shorter-wavelength-side edge of the reflection band for the characteristics A and C from the half-value wavelength (591.3 nm) at the shorter-wavelength-side edge of the reflection band for the characteristic B (incident angle = 45 degrees) were as follows.

```
    Shift for the characteristic A (incident angle = 30

degrees): +23.1 nm


    Shift for the characteristic C (incident angle = 60

degrees): -24.1 nm
```

For the purpose of comparison, referring to FIG. 5 showing the characteristics of a red-reflective dichroic filter using a conventional dielectric multilayer film described earlier, the shifts of the half-value wavelength at the shorter-wavelength-side edge of the reflection band for the characteristics A and C from the half-value wavelength (591.7 nm) at the shorter-wavelength-side edge of the reflection band for the characteristic B (incident angle = 45 degrees) were as follows.

```
    Shift for the characteristic A (incident angle = 30

degrees): +35.9 nm


    Shift for the characteristic C (incident angle = 60

degrees): -37.8 nm
```

From comparison between FIGS. 5 and 7, it can be seen that, compared with the conventional design, the shift from the half-value wavelength at the shorter-wavelength-side edge of the reflection band for the incident angle of 45 degrees is improved in the example (1) by

```
12.8 nm (= 35.9 nm - 23.1 nm) for the incident angle of 30

degrees, and
```

and

```
13.7 nm (= 37.8 nm - 24.1 nm) for the incident angle of 60 degrees.
```

<Example (2)>

The dielectric multilayer film 30 was designed using the following parameters.
Substrate: glass (having a refractive index of 1.52 and an attenuation coefficient of 0)
Film 34 of intermediate-refractive-index material: complex oxide of $La_2O_3$ and $Al_2O_3$ (having a refractive index of 1.70 and an attenuation coefficient of 0)
Film 36 of high-refractive-index material: $Ta_2O_5$ (having a refractive index of 2.16 and an attenuation coefficient of 0)
Optical thickness ratio between film 34 and film 36: approximately 0.5:2 (1:4)
Number of layers: 43
Reference wavelength (center wavelength of reflection band) $\lambda o$: 533 nm
Average refractive index of entire dielectric multilayer film 30: 2.04
The thickness of each layer in the dielectric multilayer film 30 is shown in Table 2.

[Table 2]

| Layer No. | Material | Optical thickness (nd) | Layer No. | Material | Optical thickness (nd) |
|---|---|---|---|---|---|
| (Substrate) | | | 23 | $La_2O_3$+$Al_2O_3$ | 0.125 $\lambda o$ |
| 1 | $La_2O_3$+$Al_2O_3$ | 0.158 $\lambda o$ | 24 | $Ta_2O_5$ | 0.508 $\lambda o$ |
| 2 | $Ta_2O_5$ | 0.459 $\lambda o$ | 25 | $La_2O_3$+$Al_2O_3$ | 0.127 $\lambda o$ |
| 3 | $La_2O_3$+$Al_2O_3$ | 0.143 $\lambda o$ | 26 | $Ta_2O_5$ | 0.498 $\lambda o$ |
| 4 | $Ta_2O_5$ | 0.524 $\lambda o$ | 27 | $La_2O_3$+$Al_2O_3$ | 0.125 $\lambda o$ |
| 5 | $La_2O_3$+$Al_2O_3$ | 0.131 $\lambda o$ | 28 | $Ta_2O_5$ | 0.503 $\lambda o$ |
| 6 | $Ta_2O_5$ | 0.517 $\lambda o$ | 29 | $La_2O_3$+$Al_2O_3$ | 0.126 $\lambda o$ |
| 7 | $La_2O_3$+$Al_2O_3$ | 0.129 $\lambda o$ | 30 | $Ta_2O_5$ | 0.508 $\lambda o$ |
| 8 | $Ta_2O_5$ | 0.509 $\lambda o$ | 31 | $La_2O_3$+$Al_2O_3$ | 0.127 $\lambda o$ |
| 9 | $La_2O_3$+$Al_2O_3$ | 0.127 $\lambda o$ | 32 | $Ta_2O_5$ | 0.493 $\lambda o$ |
| 10 | $Ta_2O_5$ | 0.51 $\lambda o$ | 33 | $La_2O_3$+$Al_2O_3$ | 0.123 $\lambda o$ |
| 11 | $La_2O_3$+$Al_2O_3$ | 0.128 $\lambda o$ | 34 | $Ta_2O_5$ | 0.513 $\lambda o$ |
| 12 | $Ta_2O_5$ | 0.504 $\lambda o$ | 35 | $La_2O_3$+$Al_2O_3$ | 0.128 $\lambda o$ |
| 13 | $La_2O_3$+$Al_2O_3$ | 0.126 $\lambda o$ | 36 | $Ta_2O_5$ | 0.499 $\lambda o$ |
| 14 | $Ta_2O_5$ | 0.508 $\lambda o$ | 37 | $La_2O_3$+$Al_2O_3$ | 0.125 $\lambda o$ |
| 15 | $La_2O_3$+$Al_2O_3$ | 0.127 $\lambda o$ | 38 | $Ta_2O_5$ | 0.495 $\lambda o$ |

(continued)

| Layer No. | Material | Optical thickness (nd) | Layer No. | Material | Optical thickness (nd) |
|---|---|---|---|---|---|
| 16 | $Ta_2O_5$ | 0.501 λo | 39 | $La_2O_3+Al_2O_3$ | 0.24 λo |
| 17 | $La_2O_3+Al_2O_3$ | 0.125 λo | 40 | $Ta_2O_5$ | 0.493 λo |
| 18 | $Ta_2O_5$ | 0.505 λo | 41 | $La_2O_3+Al_2O_3$ | 0.223 λo |
| 19 | $La_2O_3+Al_2O_3$ | 0.126 λo | 42 | $Ta_2O_5$ | 0.254 λo |
| 20 | $Ta_2O_5$ | 0.505λ o | 43 | $La_2O_3+Al_2O_3$ | 0.227 λo |
| 21 | $La_2O_3+Al_2O_3$ | 0.126 λo | (Air layer) | | |
| 22 | $Ta_2O_5$ | 0.499 λo | λo = 533nm | | |

FIG. 8 shows spectral transmittance characteristics of the red-reflective dichroic filter 26 according to the design of the example (2) (characteristics of the entire red-reflective dichroic filter 26) for different incident angles (simulation values). In FIG. 8, characteristics A, B and C represent the following transmittances, respectively.

Characteristics A: transmittance of s-polarized light for an incident angle of 30 degrees (= normal incident angle minus 15 degrees)

Characteristic B: transmittance of s-polarized light for an incident angle of 45 degrees (= normal incident angle)

Characteristic C: transmittance of s-polarized light for an incident angle of 60 degrees (= normal incident angle plus 15 degrees)

As can be seen from FIG. 8, the shifts of the half-value wavelength at the shorter-wavelength-side edge of the reflection band for the characteristics A and C from the half-value wavelength (592.8 nm) at the shorter-wavelength-side edge of the reflection band for the characteristic B (incident angle = 45 degrees) were as follows.

```
Shift for the characteristic A (incident angle = 30

degrees): +20.3 nm
```

```
Shift for the characteristic C (incident angle = 60

degrees): -20.8 nm
```

Comparison between FIG. 5 (showing the characteristics of a red-reflective dichroic filter using a conventional dielectric multilayer film) described earlier and FIG. 8 shows that, compared with the conventional design, the shift from the half-value wavelength at the shorter-wavelength-side edge of the reflection band for the incident angle of 45 degrees is improved in the example (2) by

```
15.6 nm (= 35.9 nm - 20.3 nm) for the incident angle of 30

degrees, and
```

and

```
17.0 nm (= 37.8 nm - 20.8 nm) for the incident angle of 60 degrees.
```

In the examples described above, the intermediate-refractive-index material forming the film 34 is a composite

oxide of $La_2O_3$ and $Al_2O_3$, and the high-refractive-index material forming the film 36 is $Ta_2O_5$. As a typical alternative combination of the intermediate-refractive-index material and the high-refractive-index material, $Al_2O_3$ (or a composite oxide of $La_2O_3$ and $Al_2O_3$) may be used as the intermediate-refractive-index material forming the film 34, and $TiO_2$ (or $Nb_2O_5$) may be used as the high-refractive-index material forming the film 36.

In the examples described above, the dielectric multilayer filter according to the present invention is configured as a dichroic filter. However, the present invention can be applied to other filters that are required to reduce the incident-angle dependency (an IR cut filter or other edge filters, for example).

**Claims**

1. A dielectric multilayer filter, comprising:

   a transparent substrate; and
   a dielectric multilayer film having a predetermined reflection band formed on one surface of the transparent substrate,
   wherein said dielectric multilayer film has a structure including films of a intermediate-refractive-index material having a refractive index higher than 1.52 and equal to or lower than 2.1 for light having a wavelength of 550 nm and films of a high-refractive-index material having a refractive index equal to or higher than 2.0 and higher than that of said films made of the intermediate-refractive-index material for light having a wavelength of 550 nm that are alternately stacked one on another, and
   the value of "the optical thickness of the film of the high-refractive-index material divided by the optical thickness of the film of the intermediate-refractive-index material" is greater than 1 and equal to or smaller than 4, preferably, greater than 2 and equal to or smaller than 4.

2. The dielectric multilayer filter according to claim 1, wherein the average refractive index of the whole of said dielectric multilayer film is equal to or higher than 1.7.

3. The dielectric multilayer filter according to claim 1 or 2, wherein said intermediate-refractive-index material is any of $LaF_3$, $Al_2O_3$, a complex oxide of $Pr_2O_3$ and $Al_2O_3$, a complex oxide of $La_2O_3$ and $Al_2O_3$, $Bi_2O_3$, $SiO$ and $Ta_2O_5$, or a complex oxide of two or more of these materials.

4. The dielectric multilayer filter according to any one of claims 1 to 3, wherein said high-refractive-index material is any of $Ta_2O_5$, $TiO_2$ and $Nb_2O_5$, or a complex oxide of any of $Ta_2O_5$, $TiO_2$ and $Nb_2O_5$ mixed with $La_2O_3$.

5. The dielectric multilayer filter according to any one of claims 1 to 4, wherein the dielectric multilayer film is any of a red-reflective dichroic filter that reflect red light, a green-reflective dichroic filter that reflects green light and an infrared cut filter that reflects infrared light.

## FIG.1

(Front surface side)

34 ─
36 ─

• •

34 ─
36 ─
34 ─

28a
28

(Back surface side)

26

30

## FIG.2

10

14
16

• •

14
16
14

12

## FIG.3

Transmittance (%) vs Wavelength (nm)

(Transmission band)　(Reflection band)

B　A

A : —— Rn0
B : —— Rn25

## FIG.4

Transmittance (%) vs Wavelength (nm)

(Transmission band)

Shorter-wavelength side edge of reflection band

(Reflection band)

19.5nm

B　A

A : —— Rn0
B : —— Rn25

## FIG.5

| | |
|---|---|
| A | ........ Ts30 |
| B | ——— Ts45  $T_{50\%}=591.7nm$ |
| C | - - - - Ts60 |

Wavelength(nm) ——►

## FIG.6

## FIG.7

## FIG.8

**EP 1 879 058 A2**

## REFERENCES CITED IN THE DESCRIPTION

**Patent documents cited in the description**

- JP 7027907 A